(19)

**Europäisches Patentamt**
**European Patent Office**
**Office européen des brevets**

(11) **EP 4 572 062 A1**

(12) **EUROPEAN PATENT APPLICATION**

(43) Date of publication:
18.06.2025 Bulletin 2025/25

(21) Application number: 23215821.2

(22) Date of filing: 12.12.2023

(51) International Patent Classification (IPC):
*H02J 3/06* (2006.01)  *H02J 3/38* (2006.01)
*H02J 3/18* (2006.01)

(52) Cooperative Patent Classification (CPC):
**H02J 3/381; H02J 3/06;** H02J 3/18; H02J 2203/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **ABB SCHWEIZ AG**
**5400 Baden (CH)**

(72) Inventors:
• **SCHLOEDER, Matthias**
**69126 Heidelberg (DE)**
• **ALEKSY, Markus**
**67065 Ludwigshafen (DE)**

• **BAUER, Philipp**
**69469 Weinheim (DE)**
• **BISKOPING, Matthias**
**69493 Hirschberg (DE)**
• **FOKKEN, Eike**
**69214 Eppelheim (DE)**
• **GUTERMUTH, Georg**
**69115 Heidelberg (DE)**
• **KARAAGAC, Abdulkadir**
**68526 Ladenburg (DE)**
• **PRIMAS, Bernhard**
**68165 Mannheim (DE)**

(74) Representative: **Maiwald GmbH**
**Engineering**
**Elisenhof**
**Elisenstrasse 3**
**80335 München (DE)**

(54) **CONTROLLING COMPONENTS OF AN ELECTRICAL MICROGRID FOR OPTIMAL RESOURCE UTILIZATION**

(57) A computer-implemented method (100) for controlling a plurality of components (1a-1f) in a microgrid (1, 22) for the distribution of electrical power, wherein the components (1a-1f) comprise sources and/or sinks for real and/or imaginary electrical currents, and/or pathways for electrical power, the microgrid (1, 22) is connected to a superordinate electrical grid (2), and the method (100) comprised the steps of:
• providing (110) a first objective (3a) regarding operation of the microgrid (1, 22);
• providing (120) a second objective (3b) regarding interaction of the microgrid (1, 22) with the superordinate electrical grid (2);
• determining (130) an objective function (3) that quantifies performance of the first objective (3a) and/or of the second objective (3b), said objective function (3) being dependent on a set of optimization variables (4) comprising at least time programs of:
◦ actions to be performed by components (1a-1f) for operating the microgrid (1, 22) towards the first objective (3a); and
◦ shares of source and/or sink capacities of components (1a-1f) to be devoted to interaction of the microgrid (1, 22) with the superordinate electrical grid (2) towards the second objective (3b); and

• optimizing (140) the optimization variables (4) towards the goal that the objective function (3) attains an extremum, said optimizing comprising simultaneous modification of at least one optimization variable (4) relating to said actions and at least one optimization variable (4) relating to said shares.

EP 4 572 062 A1

Fig. 1

**Description**

FIELD OF THE INVENTION

The invention relates to the operation of electrical microgrids that contain power generating entities, power consuming entities, and entities for storage of power, and interact with a superordinate electrical grid.

BACKGROUND

The energy landscape is changing from a centralized architecture where large power stations are supplying power in an unidirectional manner to a plurality of consumers towards a decentralized architecture with many small generating facilities and also energy storage facilities. More and more often, consumers and small generating facilities are grouped together in electrical microgrids that are connected to a superordinate electrical grid, but aim to distribute power predominantly locally within the microgrid.

Very frequently, small generating facilities and storage facilities are operated by independently acting individuals. As a consequence, they are not always being optimally utilized. For example, an electric vehicle that is not being used while its owner is at work might serve as an energy storage facility for the microgrid, or even for the superordinate electrical grid, all day until the owner needs it again to drive home. Also, photovoltaic installations could be put to a better use if the produced energy could be called upon when it is needed most.

OBJECTIVE OF THE INVENTION

It is therefore an objective of the present invention to improve the utilization of electrical equipment in an electrical microgrid, as well as the interaction of the microgrid with the superordinate electrical grid.

This objective is achieved by a computer-implemented method according to the independent claim. Further advantageous embodiments are detailed in the dependent claims.

DISCLOSURE OF THE INVENTION

The invention provides a computer-implemented method for controlling a plurality of components in a microgrid that was originally meant for the distribution of electrical power. As it will be seen further below, the purpose of the microgrid is expanded to the allocation of resources for the energy reserve of the superordinate electrical grid. The microgrid is connected to a superordinate electrical grid. Components in the microgrid considered in the context of this invention may comprise controllable sources and/or sinks for real and/or imaginary electrical currents that may be put to use in a coordinated manner according to the method. In a graph representation of the microgrid, such controllable components correspond to a controllable nodes. But components in the microgrid may also comprise pathways for electrical power, such as switches, that correspond to edges in said graph representation. Herein, "real and/or imaginary currents" means that the components are not limited to Ohmic loads, but may also contain inductances and capacitances. Besides controllable components, the microgrid also contains mere consumers of power, and also pathways for electrical power, whose behavior is not controllable by a central entity.

In the course of the method, a first objective regarding operation of the microgrid is provided. One exemplary first objective is to draw, by the microgrid, a minimal amount of power from the superordinate electrical grid, so as to maximize self-sufficiency of the microgrid, minimize the distances over which energy has to be transported, and avoid congestion in long-distance transmission lines. Another exemplary first objective is to incur a minimal net cost for power exchanged between the microgrid and the superordinate electrical grid. Because supply and demand have to be balanced exactly in the superordinate electrical grid in order to keep the frequency at its desired value of 50 Hz, prices for such a power exchange may fluctuate very much during the day, or even change sign.

Furthermore, a second objective regarding interaction of the microgrid with the superordinate electrical grid is provided. This objective may relate to the benefit that the operation of the microgrid can do for the superordinate electrical grid. One exemplary second objective is to keep the frequency of the superordinate electrical grid stable, by means of the power exchange between the microgrid and the superordinate electrical grid.

An objective function is determined. This objective function quantifies performance with respect to the first objective and/or of the second objective. In particular, in the objective function, both objectives may be weighted in any suitable manner. The objective function is dependent on a set of optimization variables. Those optimization variables represent options for doing something that affects the value of the objective function, and thus the operation of the microgrid and its interaction with the superordinate grid. Herein, "affects" means that the actions are usually meant to improve the value of the objective function. But along the way of the optimization process, there may always be steps at which the value of the objective function is worse than previously.

In particular, the set of optimization variables comprises at least time programs of:

- actions to be performed by components for operating the microgrid towards the first objective; and
- shares of source and/or sink capacities of components to be devoted to interaction of the microgrid with the superordinate electrical grid towards the second objective.

The optimization variables are optimized towards the goal that the objective function attains an extremum. Depending on the construction of the optimization function, this extremum may be a maximum or a minimum. In this step-by-step optimization process, at least one optimization variable relating to said actions for operating the microgrid and at least one optimization variable relating to said shares to be devoted to the interaction are modified simultaneously, i.e., during the same optimization procedure rather than during different subsequent optimization procedures.

It was found that improving the energy management within the microgrid on the one hand, and improving the interaction of the microgrid with the superordinate electrical grid on the other hand, compete for one and the same resource, namely quantitative capacities and/or capabilities at the controllable components in the microgrid. At the same time, the actions to be performed for operating the microgrid towards the first objective are controllable, from the perspective of the microgrid, to a far larger extent than the interaction with the superordinate electrical grid towards the second objective. The superordinate electrical grid is managed by a different entity. This means that the entity that manages the microgrid cannot unilaterally decide to, e.g., perform a targeted interaction to stabilize the frequency of the superordinate electrical grid. If multiple microgrids did the same in an uncoordinated manner, this might cause the opposite of what is intended, namely a de-stabilization of the superordinate electrical grid. Therefore, it is the job of the grid operator to coordinate the actions of microgrids. Thus, each microgrid connected to the superordinate electrical grid may offer to the superordinate electrical grid to perform certain interactions, but the entity that manages this superordinate electrical grid has the final say which interactions are performed where and when. That is, there is some uncertainty in whether devoting a certain amount of resources to said interactions with the superordinate electrical grid will actually produce the intended benefit. Situations may arise where a decision has to be made whether to devote a particular amount of resources

- either to producing a smaller but very probable benefit by improving the operating of the microgrid towards the first objective,
- or to potentially producing a larger benefit by devoting source and/or sink capacities to interaction of the microgrid with the superordinate electrical grid towards the second objective, with the uncertainty whether this capacity will actually be called upon.

With the combined optimization according to the method proposed here, the actions to be performed within the microgrid on the one hand, and the shares of capacities to be devoted to interaction with the superordinate electrical grid on the other hand, may be determined such that the overall expected benefit may be maximized. In one example, the overall expected benefit may be estimated as the amount of benefit, measured in whatever terms, times the propensity of actually achieving this benefit.

In a particularly advantageous embodiment, a contribution of the first objective towards the objective function is chosen to be a solution to a lower-level optimization problem regarding operation of the microgrid. In this manner, any knowledge about an existing optimization of the operation of the microgrid itself can be entered into the combined optimization without having to touch this optimization itself. This introduces some constraints into the combined optimization while at the same time reducing the number of truly independent optimization variables. Thus, the combined optimization becomes a bi-level optimization. At the lower level, the microgrid optimizes its own operation towards its own objectives. At the higher level, this optimization is balanced against the devoting of resources to interactions with the superordinate electrical grid. This is distinct from sequential optimization procedures that first optimize towards a first objective, thereby devoting resources to this first objective, before proceeding to work on the second and any further objectives.

For example, the lower-level optimization problem may then be solved by Mixed-Integer Linear Programming, so as to facilitate the determination of a global solution to the hierarchical (bi-level) optimization problem.

In a particularly advantageous embodiment, the interaction with the superordinate electrical grid comprises sending, to an entity controlling the superordinate electrical grid, an offer to take power from the superordinate electrical grid into the microgrid, or to inject power from the microgrid into the superordinate electrical grid, to keep the frequency of the superordinate electrical grid stable as the second objective. The entity that manages the superordinate electrical grid may then take this offer or not. If the offer is taken, this does not automatically imply that there will be a physical flow of power in the agreed amount. Rather, this means that the possibility for such a flow will be reserved and kept at the ready for a particular amount of time, so that the entity that manages the superordinate electrical grid can immediately call upon it if needed. The reason for this is that in case a need to actively stabilize the frequency actually arises, it is extremely costly, if physically possible at all, to procure the required resources just-in-time. In particular, larger amounts of resources, such as sources and sinks for power, may only be available by reservation in advance.

For example, there is a market for the "frequency containment reserve" (FCR) where resources are traded in a day-ahead bidding process. If capacity is bought there, it sits reserved for the buyer for the agreed period of time and must be paid for, whether the buyer actually uses it or not. The modalities of such markets, e.g., how long in advance the capacity needs to be reserved, and in which quantitative units reserve capacity may be traded, place further constraints on the combined optimization problem to be solved. In particular, the market modalities may affect the value of the objective function, the constraints, or both.

After the offer has been made, the entity controlling the superordinate electrical grid may transmit an acceptance or rejection back to the microgrid (i.e., to the entity managing this microgrid). The optimizing according to the combined objective function may then be restarted given this acceptance or rejection as additional information. In this manner, the result of a previous optimization may be refined. In particular, the acceptance of the offer means that the resource in question is now locked for other use in the agreed time period. Also, in any calculations of the expected benefit that use the propensity of devoting a share of resource to interactions with the superordinate electrical grid actually being beneficial, the acceptance or rejection of the offer or part thereof influences this propensity. This in turn depends on what is being called "beneficial". If "beneficial" is actually related to physical grid stability, then the propensity for a benefit depends on acceptance or rejection of offers to a higher degree than if "beneficial" merely relates to monetary rewards for offering capacities.

For the combined optimization, an estimate of a monetary reward per power unit that can be achieved by offering capacity may become relevant. In particular, depending on how much need for reserve capacity there is, this reward may be much higher at one time of day than the cost of obtaining the same amount of energy from the superordinate electrical grid at another time of a day. That is, it may be both economical and beneficial to the stability of the superordinate electrical grid to charge batteries at components in the microgrid at a time of day where power is cheap, and then offer this power as reserve capacity for frequency regulation at another time of day.

In a further particularly advantageous embodiment, the optimizing is performed under the constraint of a minimum capacity requirement for taking power from the superordinate electrical grid or injecting power into the superordinate electrical grid. This is frequently a requirement in order to avoid the market and its trading systems being overloaded with millions of micro-participants that each have a negligible effect. By orchestrating the devoting of resources to interaction with the superordinate electrical grid across the microgrid, the resources of the individual components may be bundled to form a sizeable amount that is eligible to participate in the market for reserve capacity, and also physically able to produce a desired effect to stabilize the frequency when called upon. If millions of micro-participants had to be called upon when the need to stabilize the frequency arises, this might take so much time that the actual physical flows of power might start too late to still achieve the intended effect. If the number of participants to be called upon is reduced to a more tractable number, the flows start much quicker, so the physical response comes in time to achieve the desired effect.

In particular, resources provided by the controllable components in the microgrid may comprise

- a battery storage system; and/or
- at least one additional load for artificially increasing power consumption if needed; and/or
- additional power generation capacity that can be activated if needed.

Herein, as discussed before, battery storage systems are not limited to systems whose primary use is stabilizing a power network, such as battery storage systems commonly installed in combination with photovoltaic installations. Rather, also an electric vehicle that is connected to the microgrid can serve as a battery storage system. Loads for artificially increasing power consumption may, for example, comprise heat pumps that can fill up a heat reservoir.

In a further particularly advantageous embodiment, the performance with respect to the first objective, and/or to the second objective, is determined over a predetermined time frame reaching into the future. As discussed before, in particular, resources for possible interactions of the microgrid with the superordinate electrical grid are allocated in advance, to be called upon by the grid operator as needed. By performing the optimization for a predetermined time frame that lies ahead, best use can be made of the possibilities of such interactions. For example, the predetermined time frame may reach on the order of 40 hours into the future.

In particular, the performance with respect to the first objective, and/or to the second objective, may be determined based at least in part on forecasts for

- the power generated and consumed in the microgrid; and
- prices for selling power from the microgrid to the superordinate electrical grid and for buying, by the microgrid, power from the superordinate electrical grid.

For example, if a period of very expensive prices for buying power from the superordinate electrical grid lies ahead, and it is to be expected that the consumption in the microgrid will require the buying of power from the superordinate electrical grid in the predetermined timeframe, it is economical to buy power in advance and store it in the available batteries in the microgrid, so as to be able to draw on this in the expensive periods. The same applies if prices drop particularly low at some point in time. For example, in some hours on weekends or public holidays with a large supply of renewable energy, the prices for power from the superordinate electrical grid may drop into the negative.

In particular,

- a lower-bound forecast is used for the power generated in the microgrid; and
- both a lower-bound forecast and an upper-bound forecast are used for the power consumed in the microgrid.

The lower-bound forecast for the power generated is conservative in that it underestimates the generation with high probability. It is physically easier, and also less expensive, to get rid of some excess generated power than it is to get more power when it is suddenly lacking. From this point of view, for the power consumed, the lower-bound forecast that underestimates the consumption with a high probability may be regarded as optimistic, whereas the upper-bound forecast that overestimates the consumption with a high probability may be regarded as conservative.

In a further particularly advantageous embodiment, if all optimization variables are allowed to take continuous values, the bi-level optimizing is performed using a continuous derivative-free-solution method, such as, e.g., COBYLA. This determines a local optimum efficiently. If, however, at least one optimization variable is constrained to a set of discrete values, there are two options: The optimizing may be performed using a branch and bound scheme, so as to directly accommodate this constraint. Alternatively, the optimizing may be performed continuously, and the values of the discrete variables may then be discretized in a postprocessing step. This may be numerically easier, and it may also facilitate the determination of quantities that are derived from the discrete variables. Some of these derived quantities might not be constrained to discrete values, so computing them without discretization might make their determination more accurate. However, this comes at the price that the solution may deviate from the global optimum.

In particular, if optimization variables are constrained to discrete values, these constraints may be used in a new optimization to solve the lower-level problem regarding the operation of the microgrid. In this manner, the combined optimization may enter a further iteration that refines the values of the remaining optimization variables.

In a further particularly advantageous embodiment, the method further comprises causing the microgrid to operate, and/or interact with the superordinate electrical grid, according to the optimized values of the optimization variables. In this manner, the advantages that are to be expected according to the result of the optimization are actually put into practice in the operation of the microgrid, respectively in its interaction with the superordinate electrical grid.

Because it is computer-implemented, the present method may be embodied in the form of a software. The invention therefore also relates to a computer program with machine-readable instructions that, when executed by one or more computers and/or compute instances, cause the one or more computers and/or compute instances to perform the method described above. Examples for compute instances include virtual machines, containers or serverless execution environments in a cloud. The invention also relates to a machine-readable data carrier and/or a download product with the computer program. A download product is a digital product with the computer program that may, e.g., be sold in an online shop for immediate fulfilment and downloaded to one or more computers. The invention also relates to one or more compute instances with the computer program, and/or with the machine-readable data carrier and/or download product.

As discussed before, building owners and/or operators of smart energy communities aim to make optimal use of their electrical equipment. However, there are times when the equipment is not optimally used, e.g., during vacation of house inhabitants electrical vehicles are potentially unused but could be employed as additional batteries (assuming that vehicle-to-grid is enabled) for different purposes.

The presently proposed method is a solution for this issue. It temporarily aggregates the available electrical equipment of multiple users in a smart energy community and allocates one part of the available electrical capabilities to the frequency containment reserve, while another part is allocated to the community's energy management system. This way, two issues can be improved:

  1) Fluctuations of the frequency of the electrical grid, and
  2) The performance of community energy management systems and in particular the incorporation of renewable energy sources (due to an enlarged battery storage).

Addressing these issues results in monetary benefits. To reach a reasonable and beneficial share of the aforementioned allocations, they are computed by means of a hierarchical mathematical optimization problem.

There are times when electrical equipment of assets is not optimally used, which prolongs the payback time and reduces the return on investment. E.g., if a house inhabitant is on vacation,

- there might be an electrical vehicle (EV) which is parked in front of the door that basically constitutes an unused battery of large size, or

- there might by energy produced by a photovoltaic (PV) installation that cannot be used optimally (due to the reduced consumption, the bounded storage capacity of employed battery systems and the low selling price to the electrical grid).

But also oversized electrical equipment that is not used too its full extend in normal operation mode falls into the above category, not only for smart homes but also for smart energy communities with a central energy management.

On the other hand, there are multiple technical problems for their solution such equipment could be employed. The presently proposed method focuses on two of them, namely:

1) fluctuations of the frequency of the electrical grid, and
2) the performance of energy management systems which usually improve with more available equipment.

Regarding 1), utilities are legally obliged to provide a grid frequency closely around 50Hz. However, if more power is put into the grid while the consumption is non-increasing, the grid frequency will increase. Contrary, if the consumption increases while the generation is non-increasing, the grid frequency will decrease. Matching demand and generation at every time instant (at least approximately) is challenging, in particular due to the rise of renewable energies with volatile production.

An integral part of the control strategy of the grid frequency is the so-called frequency containment reserve (FCR), which's availability is managed by a corresponding reserve market. In a nutshell, participants are paid for providing the capabilities of taking power from the grid or injecting power into the grid whenever this is needed to keep the frequency stable. For example, large battery storage systems are suited for this task. However, candidates can only participate in this market if their capabilities of consuming and injecting power exceed a certain threshold (1 MW in Germany, which is currently under consideration). The participation in the energy reserve market is controlled by a bidding process, where candidates offer their services on a daily basis. Regarding 2), the performance of an energy management system (EMS) depends, among others, on the size of the included storage systems. For instance, a battery could be charged in periods when the price for buying power from the grid is low and discharged again when prices are high. Increasing storages thus can improve the performance of EMSs, which could be measured economically (in €) in examples as the previous one, but also ecologically (e.g., in carbon emissions) in different applications.

In view of the problems stated in the previous paragraph, it seems appealing that owners of electrical equipment provide this - if they do not need it themselves - temporarily to contribute to stabilizing the grid frequency on the one hand and improve the performance of the energy management system of a local community on the other hand. One question in this context is how much resources should be allocated for which task to achieve optimal results.

The presently proposed method is a technical solution for this issue. In the following, the steps of the disclosed solution are briefly sketched:

1. In a first step, several inputs are collected, including information on the legal framework regarding the frequency containment reserve and the corresponding market, as well as the topology and technical properties of the considered community energy network. In addition, owners of smart electrical equipment allow for temporal use of parts of this equipment to a local community - including modules for generation, storage, and (potentially flexible) consumption of energy - and provide the according information.

2. Shortly before the end of the bidding period for participating in the FCR on the next day, based on the provided information a software module aggregates the equipment and this way receives an energy network with time-dependent topology and capabilities (e.g., aggregated storage volume)

3. Shortly before the end of the bidding period for participating in the FCR on the next day, the described software module receives:

a. a forecast for the renewable's generation and electrical consumption within the controlled community network, and
b. a guess for the monetary reward per power unit (e.g., €/MW) that can be achieved by participating in the FCR.

4. In the described software module, the included storage capacities are virtually separated into two virtual units each, one allocated for the community EMS and one for the frequency reserve. The temporal share is represented by variables $p_1, ..., p_m$. E.g., $p_1 = 0.5$ would mean that in the first time period for which the reserve is offered, 50% of the battery capabilities will be used for the community EMS while the other 50% are offered to the FCR.

5. Based on the previous steps, for given shares $p_1, ..., p_m$, the minimum possible price for running the resulting aggregated community energy network may be computed as part of the solution of a mathematical optimization problem ("optimal energy management problem"). Consequently, optimal shares $p_1^*, ..., p_m^*$ (in terms of energy costs and the reward from participating in the reserve market) can be computed as the solution of another hierarchical mathematical optimization problem, that includes the "optimal energy management problem" as lower-level problem. The optimal shares come along with an optimal offer to the reserve market.

The result yields optimal battery shares $p_1^*, ..., p_m^*$ together with an optimal offer to the reserve market. The optimal shares encode the information which storage capacity to allocate for the frequency reserve and which for the community EMS. This way, otherwise unused electrical equipment can be made use of - not only yielding a better, but actually an optimal result.

Depending on the legal framework, in a final 6th step the computed solution might be further postprocessed in order to receive an offer that is feasible from a legal point of view and reasonable.

The offered solution enables the smart participation of a sufficiently large energy community in the energy reserve market. With the provided procedure, the optimal allocation of the available resources can be planned, this way employing available equipment to an optimal extend (in terms of financial benefits).

DESCRIPTION OF THE FIGURES

In the following, the invention is illustrated using Figures without any intention to limit the scope of the invention. The Figures show:

Figure 1: Exemplary embodiment of the method 100 for controlling a plurality of components in a microgrid 1;

Figure 2: Example of a microgrid 1 that is interacting with a superordinate electrical grid 2;

Figure 3: Exemplary cyclic manner of performing the method 100 in a setting with a day-ahead bidding for frequency containment reserve, FCR.

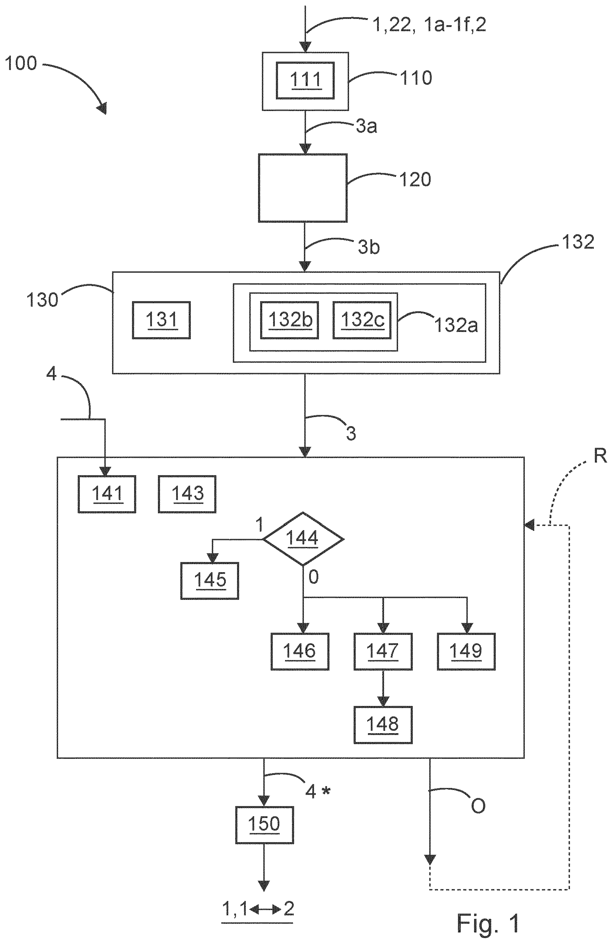

Figure 1 is a schematic flow chart of an embodiment of the method 100 for controlling a plurality of components 1a-1f in a microgrid 1, 22 for the distribution of electrical power. Components 1a-1f comprises sources and/or sinks for real and/or imaginary electrical currents, and/or pathways for electrical power. The microgrid 1, 22 is connected to a superordinate electrical grid 2.

In step 110, a first objective 3a regarding operation of the microgrid 1, 22 is provided.

According to block 111, the first objective 3a may be chosen to comprise:

- drawing, by the microgrid 1, a minimal amount of power from the superordinate electrical grid 2; and/or
- incurring a minimal net cost for power exchanged between the microgrid 1 and the superordinate electrical grid 2.

In step 120, a second objective 3b regarding interaction of the microgrid 1, 22 with the superordinate electrical grid 2 is provided.

The interaction with the superordinate electrical grid 2 may comprise sending, to an entity controlling the superordinate electrical grid 2, an offer O to take power from the superordinate electrical grid 2 into the microgrid 1, or to inject power from the microgrid 1 into the superordinate electrical grid 2, to keep the frequency of the superordinate electrical grid 2 stable. Herein, the frequency stability of the superordinate electrical grid need not be directly formulated as the second objective 3b. Rather, for example, the second objective may comprise a reward for the offer O.

In particular, the offer O may be comprised in the result of one optimization process. Based on the acceptance or rejection R received in response to this offer O, the lower-level optimization process may then be restarted. Herein, the acceptance or rejection R may also be a partial one.

In step 130, an objective function 3 that measures fulfillment of the first objective 3a and of the second objective 3b is determined. This objective function 3 is dependent on a set of optimization variables 4. The optimization variables 4 comprise at least time programs of:

- actions to be performed by components, comprising components 1a-1f, for operating the microgrid 1, 22 towards the first objective 3a; and
- shares of source and/or sink capacities of components 1a-1f to be devoted to interaction of the microgrid 1, 22 with the superordinate electrical grid 2 towards the second objective 3b.

According to block 131, a contribution of the first objective 3a towards the objective function 3 may be chosen to be a solution to a lower-level optimization problem regarding operation of the microgrid 1, 22.

According to block 132, the performance with respect to the first objective 3a, and/or of the second objective 3b, may be determined over a predetermined time frame reaching into the future.

According to block 132a, the performance with respect to the first objective 3a, and/or of the second objective 3b, may be determined based at least in part on forecasts for

- the power generated and consumed in the microgrid 1; and
- prices for selling power from the microgrid 1 to the superordinate electrical grid 2 and for buying, by the microgrid 1, power from the superordinate electrical grid 2.

According to block 132b, a lower-bound forecast may then be used for the power generated in the microgrid 1. Further, according to block 132c, both a lower-bound forecast and an upper-bound forecast may be used for the power consumed in the microgrid 1, depending on the context.

In step 140, the optimization variables 4 are optimized towards the goal that the objective function 3 attains an extremum. This optimizing comprises simultaneous modification of at least one optimization variable 4 relating to said actions and at least one optimization variable 4 relating to said shares. The finally optimized state of the optimization variables is labelled with the reference sign 4*.

According to block 141, the lower-level optimization problem may be solved by Mixed-Integer Linear Programming.

According to block 143, the optimizing may be performed under the constraint of a minimum capacity requirement for taking power from the superordinate electrical grid 2 or injecting power into the superordinate electrical grid 2.

According to block 144, it may be checked whether all optimization variables 4 are allowed to take continuous values. If this is the case (truth value 1), according to block 145, the optimizing may be performed using a continuous derivative-free-solution method.

If not all optimization variables are allowed to take continuous values, meaning that at least one optimization variable is constrained to a set of discrete values (truth value 0 at diamond 144), then, according to block 146, the optimizing may be performed using a branch and bound scheme. Alternatively, the optimizing may be performed continuously according to block 147, and the values of the discrete variables may then be discretized in a postprocessing step according to block 148.

According to block 149, any constraints of optimization variables to discrete values may be used in a new optimization to solve the lower-level problem regarding the operation of the microgrid 1.

In the example shown in Figure 1, in step 150, the microgrid 1 is caused to operate, and/or interact with the superordinate electrical grid 2, according to the optimized values 4* of the optimization variables 4. For example, the optimization variables 4 may include battery shares.

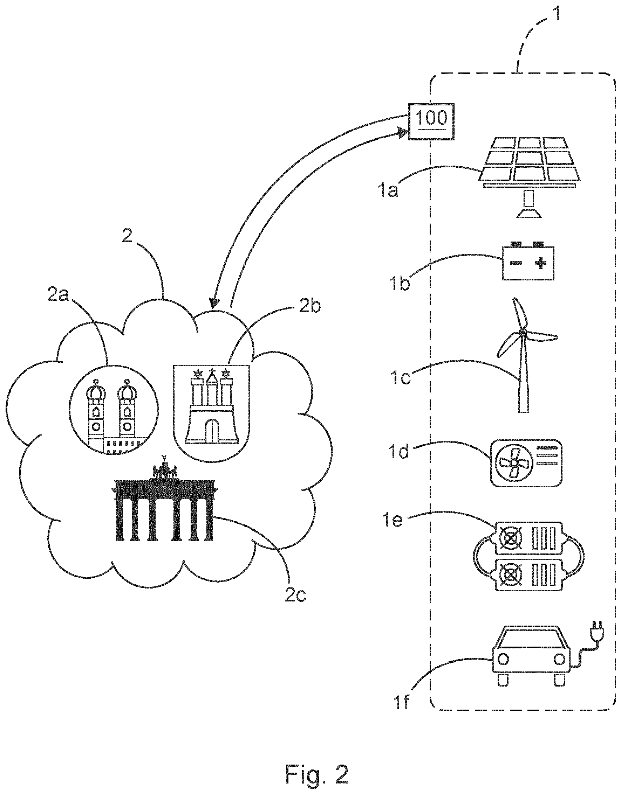

Figure 2 shows one example of a microgrid 1 that is connected to a superordinate electrical grid 2. In the example shown in Figure 2, the microgrid 1 comprises six components with controllable sources and/or sinks for power, namely

- a photovoltaic installation 1a;
- a battery storage system 1b;
- a wind turbine 1c;
- a heat pump 1d that can absorb power and use it to heat a reservoir;
- a mining farm 1e that can absorb power to mine cryptocurrencyl; and
- an electric vehicle 1f that can either store power in its battery or release it again into the microgrid 1.

Mere consumers of power in the microgrid 1 that are not centrally controllable are not shown in Figure 2.

The superordinate electrical grid 2 spans a wider area and is of a much larger size regarding the involved volumes of power. This is signified by the exemplary presence of the cities of Munich 2a, Hamburg 2b and Berlin 2c in the superordinate electrical grid 2. Therefore, it would be of no use to have each individual component 1a-1f of the microgrid 1 directly interact with the superordinate electrical grid 2. The effect of each such individual interaction would be negligible, and it would take too long to cause enough of them to achieve the desired effect in the superordinate electrical grid 2, such as stabilizing the frequency. Therefore, according to the method 100, the actions performed by the plurality of components 1a-1f, and the interaction of the microgrid 1 with the superordinate electrical grid 2, are centrally bundled. The microgrid 1 will typically be of a much smaller size than, e.g., Munich 2a, Hamburg 2b and Berlin 2c, so it may be necessary to enlist the help of multiple microgrids 1. But this means that there are still far less entities to contact than if every operator of an individual component was managing his component independently. In reality, the superordinate electrical grid 2 is not administered at a city level. Rather, a country, such as Germany, may be divided into multiple zones for which different grid operators are responsible, and those grid operators may then be connected together on a European level.

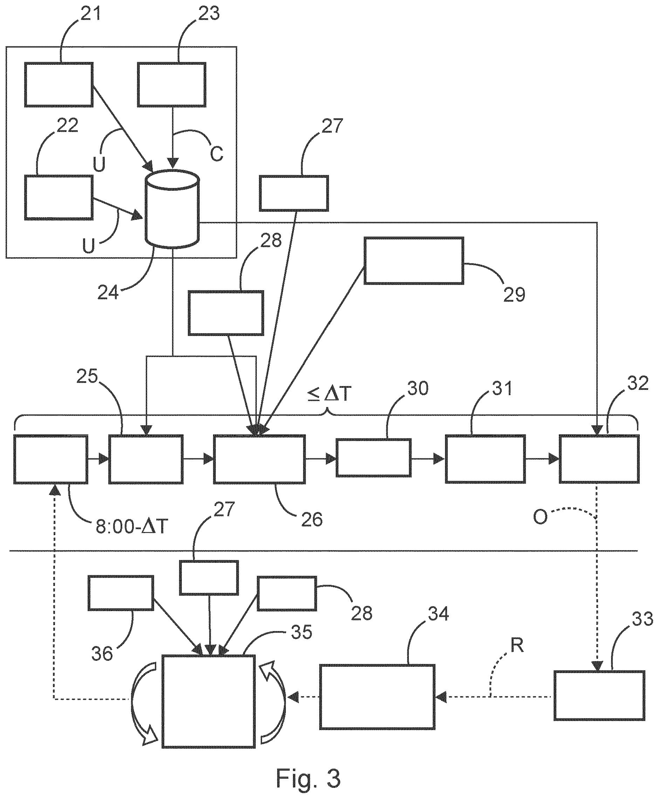

Figure 3 illustrates a cyclic manner of performing the method 100 discussed in connection with Figure 1. This example starts from the following prerequisites that are assumed to be satisfied:

- The community EMS is technically able to take over control of all technical components that are part of the considered community energy network and in particular of those which are temporarily provided to the network by single participants. This also includes monitoring devices for measurement.
- The legal framework allows the assets in the energy network to exchange power/energy directly among each other.

The proposed solution is realized in a software module that, on a daily basis, collects certain inputs and then outputs:

- the optimal share of included storages that is allocated to the community EMS on the one hand and for the reserve market on the other hand, as well as
- the optimal amount of resources that shall be offered to the energy reserve market for the next bidding period.

In the example shown in Figure 3, the method collects input regarding the community energy network 22 (microgrid) itself, the legal framework 21, as well as information 23 provided from users that want to participate in the energy community. In general, the input can be fed into a database 24 continuously (C), meaning at any point in time, or it may be updated (U) when it changes. It is fetched from the database 24 once a day when the described procedure is started.
The legal resp. control framework 21 determines the mechanism how the grid frequency is kept stable. This involves:

- Minimum power unit to offer for intake and outtake.

Current state: For the FCR, the minimum power that can be offered is currently symmetrically 1 MW, i.e.,1 MW for taking power from the grid and injecting power into the grid.

- Discrete or continuous values to offer: Can one only offer integral multiple of the minimum power units (e.g., 1MW, 2MW, 3MW, ...), or are continuous values (e.g., 1,5MW) possible as well?
- Bidding mechanism: until when does an offer for which periods need to be handed in?

Current state: One day is segmented into six periods of four hours duration each, the first starting at 0:00 and the last ending at 24:00. Bids for each of the periods must be handed at the day before until 8:00.

- Control mechanism: when are the reserves activated, how long do they need to be available, how much time do participants have to go back to feasible working area?

Current state: Criteria for activating the reserve depend on the measured deviations of the frequency from its nominal value 50Hz in a certain period. The reserve for the FCR must be fully activated within 30 seconds, and it must be possible to provide the full reserve capability for at least 20 minutes. After that, the provider has two hours to bring its system back to a state, such that is again possible to provide the full reserve capability for another 20 minutes.
The legal framework 21 is assumed to be more or less constant, and its representation in the database 24 only needs to be updated (U) once it changes.
The Community energy network (microgrid) 22 has to provide information on its network topology (i.e., which assets are connected to each other), technical information regarding the involved modules (e.g., capabilities of community owned battery system, maximum power rates for cables in network), as well as an optimization objective, that shall be employed for computing an optimal control for the resulting energy network.
The community energy network 22 is assumed to be more or less constant, and its representation in the database 24 only needs to be updated (U) once it changes (e.g., because new components are built in).
Users which are interested in participating in the mechanism need to provide the following data 23:

- Additional energy storage capabilities to be provided (including maximum discharge rate, maximum charge rate, and storage capacity), together with

  ○ guaranteed state of charge when giving control to the system, and
  ○ desired state of charge when taking back the control,

as well as the time interval in which the battery is provided to the overall system. The input of the guaranteed state of charge could for instance be transmitted automatically by an energy management system based on the planning for the next hours.

- Additional renewable energy generating assets (e.g., PV) together with the respective time intervals in which the assets are provided to the overall system.
- Additional back-up energy generating assets (e.g., diesel generators) with technical specifications (in particular, maximum power generation) together with the respective time intervals in which the assets are provided to the overall system.
- Additional electrical loads that can be turned on (e.g., oven) or for which consumption can be further increased (e.g., freezer, water heater) together with the possible additional power consumption and the respective time intervals in which the assets are provided to the overall system.

The data can in principle be inserted at any point in time. The system will read out the data when the procedure starts, which is shortly before the bidding period ends.

The software module aggregates 25 the provided user equipment 23 together with the community energy network 22, which yields a resulting energy network with time dependent topology and technical properties. To simplify the mathematical modelling, for each bidding interval, only consider assets which are available for the full period of the interval are considered. This is done similarly for the period before the first bidding interval starts, which yields an aggregated community energy network for which topology and technical properties of the involved assets are constant in in the periods $(8{:}00 - \Delta T)$ - 12:00, 12:00-16: 00,..., 20:00 - 24:00, 0:00-4:00, ... ,20:00-24:00 or similar, depending on the legal framework (that currently assumes 4h bidding intervals). This holds in particular for the included battery energy storage systems. This way, an overall duration of $40h + \Delta T$ is covered. If some parts of the capacities of the energy storages are already sold to the frequency containment reserve (see later for the mechanism), those parts shall NOT be included in the aggregated network.

Due to this period-wise constancy, the network may be referred to as a quasi-static network with

- battery storage systems,
- additional loads to artificially increase power consumption if needed, and
- additional generation back-up, that can be activated if needed.

The mathematical model 26 shall cover a time horizon that starts shortly before the end of the bidding period $t_s$ = 8:00 - AT and ends at $t_f$ at 24:00 of the next day, such that the interval $[t_s, t_f]$ covers a period of $40h + \Delta T$.

In the following, the mathematical modelling is described in detail, together with its inputs and outputs. As a result and in a nutshell, the optimal offered reserve power per interval will be modelled as the solution of a bilevel-optimization problem, where the lower-level problem is given by an "optimal energy management" problem.

The previous step yields the time-dependent quasi-static network for the time horizon $[t_s, t_f]$, including the technical properties of the involved assets and the information which assets are available in which time interval. This includes information on battery storage systems, additional loads, and back-up generation, as explained before.

Regarding the initial state of charges 27 of the batteries (where initial means the point in time, when control over the batteries is given to the overall system), for the involved battery system, two cases are distinguished:

A. If a battery is part of the aggregated network at $t_s$, the state of charge is measured. If additionally, the battery is not part of the network at all times before the start of the first bidding interval but is given back to the community for at least one of the bidding intervals, the information of the guaranteed state of charge when giving back control to the community system from the database is included, as this was part of the input.

B. If a battery is not part of the aggregated network for at $t_s$, the information of the guaranteed state of charge when giving control to the community system from the database 24 is included.

Regarding the terminal states of charge 27 for the batteries (where terminal means the point in time, when control is given back to the users), information on the required/desired state of charge when handing over the batteries back to a user is collected from the database 24.

For every renewable energy generation asset and all electrical loads, a forecast 28 for the generated and consumed power needs to be provided. In addition, a forecast 28 for the grid prices, for both, in-and outtake (i.e., selling and buying) is used. To be more precise,

- For the generating assets a conservative forecast ("lower bound"), which underestimates the generation with high probability, is used
- For the consuming assets, a conservative ("upper bound") and an optimistic ("lower bound") forecast, which over- resp. underestimate the consumptions with high probability, are used.
- For the grid prices, nominal (meaning neither conservative nor optimistic) forecasts are sufficient.

The forecast should be provided in form of a time-series, that covers the time horizon $[t_s, t_f]$, thus looking more than 40h ahead.

In addition to the forecasts for load, generation, and energy prices, an estimate 29 for the gain per unit for the participation in the frequency containment reserve, e.g., given in €/*MW,* is used. The estimate can be, e.g., based on expert knowledge.

Naturally, the question arises how much power can be offered to the reserve market. The technical abilities of the considered energy network together with the legal framework imply certain bounds on the minimum and maximum power that can be offered. In the following, let $P_{off}[i]$, i=1,...,6 be the (symmetrical) power that is offered to the reserve market in the bidding periods $B_1 = [0:00, 4:00]$, $B_2 = [4:00, 8:00]$, ..., $B_6 = [20:00, 24:00]$ on the next day.

For a *lower bound,* e.g., in Germany the limit is currently 1 MW (which is however under consideration). Thus,

$$1MW \leq P_{off}[i] \ \ for \ i = 1, ..., 6.$$

For the *upper bounds,* things are more complex, namely

    1) The offered power must be fully available for a certain period of time, currently 20min, and
    2) after an activation of the frequency control mechanism ends, the batteries must be transferred back into a state, such that they are again able to provide the offer for 20min. This must be done in at most 2hours.

Consequently and accordingly, the maximum offer is limited by

    1) the maximum charging and discharging capabilities of the available batteries in the network (which implicitly also depends in power line limits) as well as the storage capabilities,
    2) the maximum additional consumption, the renewables generation, and well as generation back-ups (that could be used as a last option to transfer the batteries to their allowed operation mode).

Regarding point 1), let $i \in \{1, ..., 6\}$ and $BESS_1[i], ..., BESS_{k[i]}[i]$ batteries with according maximum charge rates, discharge rates, and capacities $maxcharge_j[i]$, $maxdischarge_j[i]$, and $cap_j[i]$, that are allocated for the frequency containment reserve in an interval $B_i$.

Let

$$maxcharge^{low}[i] = k[i] \cdot min_{j=1,...k} maxcharge_j[i]$$

be a lower bound for the aggregated maximum charge rate per time interval,

$$maxdischarge^{low}[i] = k[i] \cdot min_{j=1,...k} maxdischarge_j[i]$$

a lower bound for the aggregated maximum dischare rates per time interval and

$$cap[i] = \sum_{j=1}^{k[i]} cap_j[i]$$

the aggregated battery capacity per time interval, e.g., in kWh. As the batteries are the main source for providing this reserve, it follows that

$$P_{off}[i] \leq maxcharge^{low}[i]$$

and

$$P_{off}[i] \leq maxdischarge^{low}[i].$$

Furthermore, since the reserve needs to be provided for at least 20min and symmetrically, it follow that

$$P_{off}[i] \cdot \frac{1h}{3} \le \frac{1}{2} \, cap[i]$$

or equivalently

$$P_{off}[i] \le \frac{3}{2h} cap[i]$$

("h" being the unit "hour").

Altogether, regarding 1) the following is an upper bound for the offered reserve power per time interval:

$$P_{off}[i] \le min \left\{ maxcharge^{low}[i], maxdischarge^{low}[i], \frac{3}{2h} cap[i] \right\}$$

In a similar manner, constraints on the maximum power flow through physical power lines that influence the maximum possible offered reserve power can be respected.

Regarding point 2), there are two extreme scenarios that are of interest and also cover less extreme situations.

*Scenario A.:* All network batteries are is fully charged and thus needs to be discharged in order to be capable of taking power from the grid again at a later point.

Thus, if the current time $t_{now}$ is in interval $B_i$, one has two hours to consume $P_{off}[i] \cdot \frac{1h}{3}$ or $P_{off}[i+1] \cdot \frac{1h}{3}$ energy, depending on if $t_{now}$ + 2h is in interval $B_i$ or $B_{i+1}$.

For reasons that will become clear later, the existence of an additional battery $BESS_{add}$ that is not employed for the frequency containment reserve is assumed.

The "reserve-batteries" can be discharged again by the following measures:

- loading the additional battery $BESS_{add}$ as far as possible
- shutting down renewable energy production and satisfy all occurring loads for the battery as far as possible.
- activation of additional loads,
- selling power to the grid (which could come with additional costs in case of negative prices).

Since forecasts on the renewable's generation (for this use-case, lower bound) and the load consumption (for this use-case, lower bound) are available, from the above additional constraints on the maximum offered reserve power $P_{off}[i]$ may be computed.

*Scenario B.:* The battery is fully discharged and thus needs to be recharged in order to be capable of put power into the grid again at a later point.

As above, at any given time instant one must be able to provide $P_{off}[i] \cdot \frac{1h}{3}$ or $P_{off}[i+1] \cdot \frac{1h}{3}$ kWh of energy. Assuming again the existence of an additional battery that is not employed in the offer to the reserve market, the battery can be charged again by

- taking power from $BESS_{add}$ as far as possible
- turn on generators (produces additional costs)
- buy power from the grid (produces additional costs)

Thus, from the capabilities of $BESS_{add}$, the capabilities of generators, and the grid itself, further constraints on the offered reserve power $P_{off}[i]$ may be deduced.

In the following the batteries are virtually split-up into two parts, where the first part is allocated for use in the community energy management, and the second part for the frequency containment reserve. This split-up is only conducted for the time for which the reserve is offered, i.e., 0:00-24:00 on the next day.

Let

$$p_1, p_2, ..., p_6 \in [0,1]$$

describe proportional shares per time interval (that will be determined optimally later). Here, in each bidding interval $B_i$ only those batteries, that are available for the full interval are considered.

On each interval $B_i$, each physical battery $BESS_j[i]$ is split-up into two parts, an energy-management part

$$BESS_j^{EM}[i]$$

with maximum charge rate/discharge rate and capacity

$p_i \cdot$ *maxcharge*$^{low}[i]$, $p_i \cdot$ *maxdischarge*$^{low}[i]$, and $p_i \cdot cap_j[i]$ and a reserve market part

$$BESS_j^{RM}[i]$$

with maximum charge rate/discharge rate and capacity

$(1 - p_i) \cdot$ *maxcharge*$^{low}[i]$, $(1 - p_i) \cdot$ *maxdischarge*$^{low}[i]$, and $(1 - p_i) \cdot cap_j[i]$ At 0:00, when the virtual split-up becomes active, the state of charge of each battery is distributed in a way, that the offered reserve can be provided from the reserve market part, and the remaining energy is put into the energy management part. In a reasonable setup, this can be made possible, since one has at least 16 hours between the start of the procedure and the beginning of the first bidding period, which should be sufficient for preparation of such a state. This requirement is added to the constraints of the lower-level problem, see next section.

Remark, that this virtual split up is basically an accounting treatment. Hence, there are now transmission limits and no energy losses when transferring energy from the energy management to the reserve market part inside one physical battery.

For given shares $p_1, p_2, ..., p_6 \in [0,1]$, an optimal energy management strategy according to a given objective is computed, where the employed batteries are the "energy management batteries" from the previous section. The energy management strategy incorporates the available conservative forecast for load and renewables generation, i.e., employes a lower bound of the generation and an upper bound for the load (which makes the solution more robust in real-world applications).

In a nutshell, a solution of the optimal energy management problem describes a cost-optimal strategy for controlling the energy network 22 on a certain time horizon while satisfying given constraints, according to a given objective. In the example shown in Figure 3, the time horizon is given by $[t_s, t_f]$, and lasts for more than 40 hours.

The optimal energy management strategy will enter the overall modelling as the lower-level problem of a hierarchical optimization problem. Thus, it is important to employ a modeling that allows for determination of a global solution. To achieve this, e.g., Mixed-Integer Linear Programming (MILP) approaches can be used - a common approach in literature.

The offered reserve power must be provided for at least 20 min. In our model, this capability is provided by the reserve market batteries, which establishes constraints on the initial states of charge of the reserve market batteries. Let

$RMSoC_j^{init}[i]$ be the state of charge of the reserve market battery j at the beginning of interval $B_i$ in kWh, and $P_{off}[i]$ the offered reserve capacity in interval i. This yields the constraints

$$P_{off}[i] \cdot \frac{1h}{3} \leq \sum_{j=1}^{k[i]} RMSoC_j^{init}[i] \leq \left( \sum_{j=1}^{k[i]} cap_j[i] \right) - P_{off}[i] \cdot \frac{1h}{3}$$

on the sum of the initial state of charges, where $k[i]$ denotes the number of available batteries in interval $B_i$. These constraints are included in the mathematical modeling.

The optimal energy management problem will then compute an optimal energy management strategy on time horizon that covers the time $[t_s, t_f]$. If reserve is already offered in the current day, corresponding constraints must be respected in the computation of the optimal energy management strategy. Here, optimal relates to resulting economical costs, in €.

For ease of notation, let $EM_{res}(p)$ denote the optimal value of the cost function (in €), that is achieved by solving the optimal energy management problem for given shares $p_1, p_2, ..., p_6 \in [0,1]$. If the problem is infeasible (i.e., there is no strategy that satisfies all constraints), the value is set to $+\infty$.

In view of the virtual split-up of the batteries, for a given share $p_1, p_2, ..., p_6 \in [0,1]$, upper bounds for the maximum possible power flow per time interval: $P_{off}[i] \leq bound$ are obtained. As explained before, these bounds depend on

- the technical properties of the energy management battery (and thus in particular on $p_1, p_2, ..., p_6$),
- load and generation forecasts,
- the availability of additional loads,
- the available back-up generators,
- limits on buying or selling power to the grid.

As all information is given and fixed, except for the parameters itself which are subject of optimization, these constraints may be summarized in the form

$$P_{off}[i] \leq bound(p)$$

in order to highlight the dependency of the upper bound on the chose parameters. This constraint can be equivalently expressed by a set of linear constraints:

$$P_{off}[i] \leq bound_j^{lin}(p), j = 1, \ldots, m(i)$$

with $bound_j^{lin}(p)$ being linear in p.

However, the employment of back-up generators or the ability of buying or selling power to the grid (the latter possibly for a negative price) should be avoided in practice as far as possible, since they cause additional cost. To account for that, a worst-case term $C(p)$ for the expected costs with a probability factor $\pi$ is included in the objective function.

Ultimately, a goal is to get an optimal offer $P_{off}[i]$ to the energy reserve market, where optimality is measured in terms of the resulting costs. As the offer is constrained by the choice of the shares of the physical batteries that are allocated for the application in the reserve market, the optimal offer can be computed by solving the following mathematical bi-level optimization problem:

$$\max_{\substack{P_{off}[1], \ldots, P_{off}[6], \\ p_1, \ldots, p_6 \in [0,1]}} \left( \sum_{i=1}^{6} P_{off} r_i \right) - EM_{res}(p) - \pi C(p)$$

$$\text{s.t.} \quad P_{off}[i] \leq \text{lin-bounds}_j(p) \text{ for } i = 1, \ldots, 6, \text{ and } j = 1, \ldots, m(i)$$
$$1 \leq P_{off}[i] \text{ for } i = 1, \ldots, 6,$$

$$EM_{res}(1) \leq - \left( \sum_{i=1}^{6} P_{off} r_i \right) + EM_{res}(p) + \pi C(p)$$

Where:

- $r_i$ are the estimated rewards per power unit (see inputs),

- $EM_{res}(p)$ is the optimal objective function value of the optimal energy management problem for a given p (see above). Remark, that $EM_{res}(p)$ itself is the optimal objective function value of a MILP.

- $bound_j^{lin}(p)$ are linear terms in $p$, which's number possible depends on i,

- C(p) are the worst-case costs that occur if generators or the grid need to be employes to recharge an emptied "reserve-battery" again (based on fuel and grid prices, where for the latter a forecast is available), and $\pi$ a factor that encodes the probability, with which this event is taken into consideration. The factor could, e.g., provided by a domain expert, or extracted from historical data.

A solution of the bilevel optimization problem includes particularly the values $P_{off}[1], ..., P_{off}[6]$ which then can be offered to the reserve market.

Depending on the legal framework, the offered powers are allowed to take continuous values or only integral multiples of the base unit (e.g., 1MW). To encode the latter case in our modeling, $P_{off}[i]$ would be restricted to take values in a discrete set, if this is computationally feasible in terms of the employed algorithm (meaning that the algorithm can find a solution sufficiently fast). Otherwise, continuous values are allowed in the computation, and real-world feasibility is achieved by a postprocessing step.

Depending on whether $P_{off}[i]$ takes continuous or discrete values, different algorithms might be employed for the numerical solution 30.

If the values $P_{off}[1], \ldots, P_{off}[6]$ can be chosen continuously, a continuous derivative-free solution methods may be applied to the problem (e.g., COBYLA) to determine a local optimum.

If values $P_{off}[1], \ldots, P_{off}[6]$ are constrained to a discrete set, this constitutes a Mixed-Integer Problem. In principle, a suitable branch and bound scheme can be applied to solve the resulting problem.

If this is not possible due to the resulting computational burden and real-world requirements, continuous values may be allowed despite of the discrete-set constraints, and a postprocessing step 32 may be applied.

Thus in any case, an optimal offer to the reserve market and optimal battery allocations 31 are obtained, at least for the continuous case.

The postprocessing step becomes only necessary if $P_{off}[1], \ldots, P_{off}[6]$ are legally constrained to a discrete set, but the solution 30 obtained previously includes values outside this set. In this case, all 6 received values are rounded to their closest lower value in the discrete set, which are denoted by $\underline{P_{off}}[1], \ldots \underline{P_{off}}[6]$.

Subsequently, a modified version of the optimal energy management problem is considered, which additionally includes the constraints

$$\underline{P_{off}}[i] \le \text{lin-bounds}_j(p) \text{ for } i = 1, \ldots, 6, \text{ and } j = 1, \ldots, m(i)$$

This answers the question what the optimal shares $p_1, \ldots, p_6$ are that can be allocated to the community energy management system while ensuring that the offers $P_{off}[1], \ldots P_{off}[6]$ remain possible.

Subsequently, it is checked again whether the proposed results yield lower costs compared to the situation, in which the whole batteries are used for energy management and no offer is made to the reserve market 33.

The resulting solution 31 (maybe postprocessed 32, if necessary) is then offered (O) to the reserve market 33, at latest at 8:00. Until 8:30 (current legal state), it is decided which offers are accepted.

The system receives this information (R) of the accepted offer and allocates respective resources in the batteries. If the offer was not accepted as a whole, for this allocation the procedure that was described in the postprocessing step can be used. Then, an adapted version 34 of the optimal energy management problem may be solved.

The described solution method computes a certain offer, that is made to the reserve market for the next day. The energy network of the considered community, and in particular the included batteries, is controlled by an EMS, which makes a planning for the future according to the computed optimal solution. However, during the day, a closed-loop control 35 will be applied, which reacts on deviations of the forecast 28, on the current state of charge 27, and on reserve demands 36. As the employed forecast is chosen conservatively, in reality - at least most likely - generation will be higher than expected, and loads will be lower than expected. Nominally, this closed-loop control employs model predictive control, MPC, and optionally fallback strategies.

The additional energy that comes with this is stored the batteries as far as possible (in a way that the part of the battery that is allocated for the reserve is not overfilled) which provides an additional buffer that can be employed in case the battery needs to be recharged again after 20 minutes of reactance on disturbances due to the reserve market offering.

In reality, one will try to steer the system in a way such that that the state of charge of the "energy-management batteries" is higher than computed in the initial "planning" run. This adds another certainty that no additional costs arise from the participation in the reserve market or the deviation of reality from the considered forecasts.

Since the deadline for offers to the reserve market is at 8:00 and the procedure starts at 8:00 - $\Delta T$, an upper bound for the runtime of the procedure is $\Delta T$. Hence, $\Delta T$ should be chosen based on empirical values regarding the runtime.

**List of reference signs:**

| 1 | microgrid |
| 1a-1f | components in microgrid 1 |
| 2 | superordinate electrical grid |
| 2a-2c | cities in superordinate electrical grid 2 |
| 3 | objective function |
| 3a | first objective for operation of microgrid 1 |
| 3b | second objective for interaction with superordinate grid 2 |

| 4 | optimization variables |
|---|---|
| 4* | finally optimized state of optimization variables 4 |
| 21 | legal framework |
| 22 | microgrid |
| 23 | information provided from users |
| 24 | database |
| 25 | network aggregation |
| 26 | mathematical model for bi-level optimization |
| 27 | current states of charge of batteries |
| 28 | forecasting |
| 29 | estimate for gain by offers O to reserve market |
| 30 | numerical solution of bi-level optimization problem |
| 31 | optimal offer and battery allocations |
| 32 | postprocessing to accommodate integer constraints |
| 33 | energy reserve market |
| 34 | recalculation of lower-level problem |
| 35 | operation under MPC until next cycle |
| 36 | reserve demands |
| 100 | method for controlling components 1a-1f |
| 110 | providing first objective 3a |
| 111 | specific choices for first objective 3a |
| 120 | providing second objective 3b |
| 130 | deriving objective function 3 |
| 131 | setting up bi-level optimization problem |
| 132 | determining objective fulfillment for future time frame |
| 132a | determining fulfillment based on specific forecasts |
| 132b | using lower-bound forecast for power generated |
| 132c | using lower-bound and upper-bound consumption forecasts |
| 140 | optimizing optimization variables 4 |
| 141 | solving by Mixed-Integer Linear Programming |
| 143 | optimizing given minimum capacity requirement |
| 144 | checking whether all variables 4 may take continuous values |
| 145 | solving with continuous derivative-free solution method |
| 146 | optimizing using branch and bound scheme |
| 147 | optimizing continuously |
| 148 | discretizing in postprocessing step |
| 149 | using integer constraints in new optimization |
| 150 | causing operation/interaction according to result 4* |
| O | offer to reserve market |
| R | response from reserve market |
| $\Delta T$ | time for performing calculations |

**Claims**

1. A computer-implemented method (100) for controlling a plurality of components (1a-1f) in a microgrid (1, 22) for the distribution of electrical power, wherein the components (1a-1f) comprise sources and/or sinks for real and/or imaginary electrical currents, and/or pathways for electrical power, the microgrid (1, 22) is connected to a superordinate electrical grid (2), and the method (100) comprised the steps of:

   • providing (110) a first objective (3a) regarding operation of the microgrid (1, 22);
   • providing (120) a second objective (3b) regarding interaction of the microgrid (1, 22) with the superordinate electrical grid (2);
   • determining (130) an objective function (3) that quantifies performance of the first objective (3a) and/or of the second objective (3b), said objective function (3) being dependent on a set of optimization variables (4) comprising at least time programs of:

      ∘ actions to be performed by components (1a-1f) for operating the microgrid (1, 22) towards the first objective (3a); and

◦ shares of source and/or sink capacities of components (1a-1f) to be devoted to interaction of the microgrid (1, 22) with the superordinate electrical grid (2) towards the second objective (3b); and

• optimizing (140) the optimization variables (4) towards the goal that the objective function (3) attains an extremum, said optimizing comprising simultaneous modification of at least one optimization variable (4) relating to said actions and at least one optimization variable (4) relating to said shares.

2. The method (100) of claim 1, wherein a contribution of the first objective (3a) towards the objective function (3) is chosen (131) to be a solution to a lower-level optimization problem regarding operation of the microgrid (1, 22).

3. The method (100) of claim 2, wherein the lower-level optimization problem is solved (141) by Mixed-Integer Linear Programming.

4. The method (100) of any one of claims 1 to 3, wherein the interaction with the superordinate electrical grid (2) comprises sending, to an entity controlling the superordinate electrical grid (2), an offer (O) to take power from the superordinate electrical grid (2) into the microgrid (1), or to inject power from the microgrid (1) into the superordinate electrical grid (2), to keep the frequency of the superordinate electrical grid (2) stable.

5. The method (100) of claim 4, further comprising:

• receiving, from the entity controlling the superordinate electrical grid (2), an acceptance or rejection (R) of the offer (O) or part thereof; and
• restarting the optimizing (140) given this acceptance or rejection (R) as additional information.

6. The method (100) of any one of claims 4 to 5, wherein the optimizing is performed (143) under the constraint of a minimum capacity requirement for taking power from the superordinate electrical grid (2) or injecting power into the superordinate electrical grid (2).

7. The method (100) of any one of claims 1 to 6, wherein at least one component (1a-1f) comprises:

• a battery storage system; and/or
• at least one additional load for artificially increasing power consumption if needed; and/or
• additional power generation capacity that can be activated if needed.

8. The method (100) of any one of claims 1 to 7, wherein the first objective (3a) is chosen (111) to comprise:

• drawing, by the microgrid (1), a minimal amount of power from the superordinate electrical grid (2); and/or
• incurring a minimal net cost for power exchanged between the microgrid (1) and the superordinate electrical grid (2).

9. The method (100) of any one of claims 1 to 8, wherein the performance with respect to the first objective (3a), and/or of the second objective (3b), is determined (132) over a predetermined time frame reaching into the future.

10. The method (100) of claim 9, wherein the performance with respect to the first objective (3a), and/or to the second objective (3b), is determined (132a) based at least in part on forecasts for

• the power generated and consumed in the microgrid (1); and
• prices for selling power from the microgrid (1) to the superordinate electrical grid (2) and for buying, by the microgrid (1), power from the superordinate electrical grid (2).

11. The method (100) of claim 10, wherein

• a lower-bound forecast is used (132b) for the power generated in the microgrid (1); and
• both a lower-bound forecast and an upper-bound forecast are used (132c) for the power consumed in the microgrid (1).

12. The method (100) of any one of claims 1 to 11, wherein:

• if all optimization variables (4) are allowed (144) to take continuous values, the optimizing is performed (145) using a continuous derivative-free-solution method, whereas,
• if at least one optimization variable (4) is constrained (144) to a set of discrete values,

◦ the optimizing is performed (146) using a branch and bound scheme, or
◦ the optimizing is performed (147) continuously, and the values of the discrete variables are discretized (148) in a postprocessing step.

13. The method (100) of claims 2 and 12, wherein the constraints to discrete values are used (149) in a new optimization to solve the lower-level problem regarding the operation of the microgrid (1).

14. The method (100) of any one of claims 1 to 13, further comprising: causing (150) the microgrid (1) to operate, and/or interact with the superordinate electrical grid (2), according to the optimized values (4*) of the optimization variables (4).

15. A computer program, comprising machine-readable instructions that, when executed by one or more computers and/or compute instances, cause the one or more computers and/or compute instances to perform the method (100) of any one of claims 1 to 13.

16. A non-transitory machine-readable data carrier and/or a download product with the computer program of claim 14.

17. One or more computers and/or compute instances with the computer program of claim 14, and/or with the non-transitory machine-readable data carrier and/or download product of claim 15.

Fig. 1

Fig. 2

Fig. 3

Europäisches Patentamt
European Patent Office
Office européen des brevets

# EUROPEAN SEARCH REPORT

**Application Number**

EP 23 21 5821

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 523 481 A (UNIV SHANDONG TECHNOLOGY) 1 August 2023 (2023-08-01) | 1-4,6-17 | INV.<br>H02J3/06<br>H02J3/38<br>H02J3/18 |
| Y | * claims 2,4 *<br>* paragraph [0142] *<br>* paragraph [0064] - paragraph [0071] *<br>* paragraph [0081] - paragraph [0103] *<br>* paragraph [0125] - paragraph [0139] *<br>----- | 5 | |
| Y | ANTONIADOU-PLYTARIA KYRIAKI ET AL: "Scenario-Based Stochastic Optimization for Energy and Flexibility Dispatch of a Microgrid", IEEE TRANSACTIONS ON SMART GRID, IEEE, USA, vol. 13, no. 5, 13 May 2022 (2022-05-13), pages 3328-3341, XP011918048, ISSN: 1949-3053, DOI: 10.1109/TSG.2022.3175418 [retrieved on 2022-05-16] * page 3334, right-hand column, line 20 - line 33 *<br>----- | 5 | |
| A | MATAMALA YOLANDA ET AL: "A two-stage stochastic Stackelberg model for microgrid operation with chance constraints for renewable energy generation uncertainty", APPLIED ENERGY, ELSEVIER SCIENCE PUBLISHERS, GB, vol. 303, 31 August 2021 (2021-08-31), XP086798792, ISSN: 0306-2619, DOI: 10.1016/J.APENERGY.2021.117608 [retrieved on 2021-08-31] * paragraph [02.1] - paragraph [02.2] *<br>----- | 1,15-17 | TECHNICAL FIELDS SEARCHED (IPC)<br>H02J<br>G06Q |

The present search report has been drawn up for all claims

| Place of search | Date of completion of the search | Examiner |
|---|---|---|
| Munich | 24 May 2024 | Despis, Enguerran |

EPO FORM 1503 03.82 (P04C01)

## ANNEX TO THE EUROPEAN SEARCH REPORT
## ON EUROPEAN PATENT APPLICATION NO.

EP 23 21 5821

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2024

| Patent document cited in search report | Publication date | Patent family member(s) | Publication date |
|---|---|---|---|
| CN 116523481 A | 01-08-2023 | NONE | |

EPO FORM P0459

For more details about this annex : see Official Journal of the European Patent Office, No. 12/82